# EUROPEAN PATENT APPLICATION

(11) **EP 3 447 387 A1**
(43) Date of publication of application: **27.02.2019**
(21) Application number: 18189113.6
(22) Date of filing: 15.08.2018
(51) Int. Cl.: F23R 3/28

(54) **NON-UNIFORM MIXER FOR COMBUSTION DYNAMICS ATTENUATION**

(30) Priority: 21.08.2017 US 201715681851
(71) Applicant: General Electric Company, Schenectady, NY 12345 (US)
(72) Inventor: LI, Hejie, Cincinnati, OH Ohio 45215 (US); BURRUS, David Louis, Maineville, OH Ohio 45039 (US); RAO, Arvind Kumar, 560066 Bangalore (IN); KELOTH, Sreejith, 560066 Bangalore (IN)
(74) Representative: Williams, Andrew Richard

(57) **Abstract**

The present disclosure is directed to gas turbine engine (10) including a combustor assembly (50) comprising a fuel nozzle (70) and an annular shroud (110). The fuel nozzle (70) comprises a centerbody (105) extended along a lengthwise direction. The fuel nozzle (70) defines a nozzle centerline (11) extended through the centerbody (105) of the fuel nozzle (70) along the lengthwise direction. The fuel nozzle (70) defines a plurality of exit openings (107) in circumferential arrangement on the centerbody (105) relative to the nozzle centerline (11). The annular shroud (110) surrounds the centerbody (105) of the fuel nozzle (70). At least a portion of the shroud (110) defines a contoured structure (113) defining a waveform.

## Description

### FIELD

The present subject matter relates generally to turbine engine combustion assemblies.

### BACKGROUND

Pressure oscillations generally occur in combustion sections of gas turbine engines resulting from the ignition of a fuel and air mixture within a combustion chamber. While nominal pressure oscillations are a byproduct of combustion, increased magnitudes of pressure oscillations may result from generally operating a combustion section at lean conditions, such as to reduce combustion emissions. Increased pressure oscillations may damage combustion sections and/or accelerate structural degradation of the combustion section in gas turbine engines, thereby resulting in engine failure or increased engine maintenance costs. As gas turbine engines are increasingly challenged to reduce emissions, structures for attenuating combustion gas pressure oscillations are needed to enable reductions in gas turbine engine emissions while maintaining or improving the structural life of combustion sections.

### BRIEF DESCRIPTION

Aspects and advantages of the invention will be set forth in part in the following description, or may be obvious from the description, or may be learned through practice of the invention.

The present disclosure is directed to a combustor assembly for a gas turbine engine comprising a fuel nozzle and an annular shroud. The fuel nozzle comprises a centerbody extended along a lengthwise direction. The fuel nozzle defines a nozzle centerline extended through the centerbody of the fuel nozzle along the lengthwise direction. The fuel nozzle defines a plurality of exit openings in circumferential arrangement on the centerbody relative to the nozzle centerline. The annular shroud surrounds the centerbody of the fuel nozzle. At least a portion of the shroud defines a contoured structure defining a waveform.

In one embodiment, the waveform is triangle, sinusoidal, or box.

In another embodiment, the contoured structure of the shroud extends along the lengthwise direction.

In various embodiments, the combustor assembly defines a second reference plane along the radial direction from the nozzle centerline at a position along the lengthwise direction. The plurality of exit openings on the centerbody is defined at least approximately along the second reference plane. In one embodiment, the combustor assembly defines a first reference plane along the radial direction from the nozzle centerline at a position along the lengthwise direction. The shroud and the centerbody each define a downstream-most end approximately co-planar at the first reference plane. In another embodiment, the combustor assembly defines a third reference plane along the radial direction from the nozzle centerline at a position along the lengthwise direction. The third reference plane is defined downstream of the second reference plane along the lengthwise direction. A downstream-most end of the shroud is defined at least approximately at the third reference plane.

In still various embodiments, the contoured structure of the shroud extends at least partially along a radial direction relative to the nozzle centerline. In one embodiment, the contoured structure of the shroud further extends at least partially along a circumferential direction relative to the nozzle centerline.

In still yet various embodiments, the exit openings define two or more cross sectional areas through the centerbody different from one another. In one embodiment, the plurality of exit openings defines a first exit opening of a first cross sectional area and a second exit opening of a second cross sectional area different from the first cross sectional area.

Another aspect of the present disclosure is directed to a gas turbine engine defining an axial centerline, a radial direction extended therefrom, and a circumferential direction around the axial centerline. The gas turbine engine includes a combustor assembly disposed generally concentric to the axial centerline of the gas turbine engine. The combustor assembly includes a plurality of fuel nozzles disposed in circumferential arrangement around the axial centerline. Each fuel nozzle comprises a centerbody extended along a lengthwise direction and defining a nozzle centerline therethrough, and wherein an annular shroud is defined around the centerbody, and wherein at least a portion of the shroud defines a contoured structure defining a waveform, and wherein each fuel nozzle defines a plurality of exit openings in circumferential arrangement on the centerbody relative to the nozzle centerline.

In various embodiments of the gas turbine engine, the combustor assembly defines a second reference plane along the radial direction from the nozzle centerline at a position along the lengthwise direction. The plurality of exit openings on the centerbody is defined at least approximately along the second reference plane. In one embodiment, the combustor assembly defines a first reference plane along the radial direction from the nozzle centerline at a position along the lengthwise direction, and the shroud and the centerbody each define a downstream-most end approximately co-planar at the first reference plane. The first reference plane relative to the second reference plane defines a first immersion depth of the fuel nozzle. In another embodiment, the combustor assembly defines a third reference plane along the radial direction from the nozzle centerline at a position along the lengthwise direction, and wherein the third reference plane is defined downstream of the second reference plane along the lengthwise direction. A downstream-most end of the shroud is defined at least approximately at the third reference plane. The third reference plane relative to the second reference plane defines a second immersion depth of the fuel nozzle.

In one embodiment of the gas turbine engine, the waveform is triangle, sinusoidal, or box.

In another embodiment, the contoured structure of the shroud extends along the lengthwise direction.

In various embodiments, the contoured structure of the shroud extends at least partially along a radial direction relative to the nozzle centerline. In one embodiment, the contoured structure of the shroud further extends at least partially along a circumferential direction relative to the nozzle centerline.

In another embodiment of the gas turbine engine, the combustor assembly defines a first annular shroud and a second annular shroud, in which the first annular shroud defines a first waveform different from a second waveform of the second annular shroud.

In still another embodiment of the gas turbine engine, the fuel nozzle is configured to provide a flow of fuel through the centerbody and egressing from the exit openings into a combustion chamber of the combustor assembly, and wherein the contoured structure of the annular shroud provides a circumferentially asymmetric flame relative to the axial centerline within the combustion chamber.

These and other features, aspects and advantages of the present invention will become better understood with reference to the following description and appended claims. The accompanying drawings, which are incorporated in and constitute a part of this specification, illustrate embodiments of the invention and, together with the description, serve to explain the principles of the invention.

### BRIEF DESCRIPTION OF THE DRAWINGS

A full and enabling disclosure of the present invention, including the best mode thereof, directed to one of ordinary skill in the art, is set forth in the specification, which makes reference to the appended drawings, in which:
FIG. 1 is a schematic cross-sectional view of an exemplary embodiment of a gas turbine engine;
FIG. 2 is a cross sectional side view of an exemplary embodiment of a combustor assembly of the gas turbine engine generally provided in FIG. 1;
FIG. 3 is a perspective view of an exemplary embodiment of a fuel nozzle of the combustor assembly generally provided in FIG. 2;
FIG. 4 is a perspective view of an embodiment of a shroud of the combustor assembly surrounding the fuel nozzle generally provided in FIG. 3;
FIG. 5 is an axial view of the shroud generally provided in FIG. 4;
FIG. 6 is an axial cross-sectional of an exemplary embodiment of a shroud of the combustor assembly generally provided in FIG. 2;
FIG. 7 is a circumferential view of an embodiment of the shroud generally provided in FIG. 6;
FIG. 8 is a circumferential view of another embodiment of the shroud generally provided in FIG. 6;
FIG. 9 is an axial view of an embodiment of the combustor assembly including an embodiment of the shroud and an embodiment of the fuel nozzle each generally provided in FIGS. 2-8; and
FIG. 10 is an axial view of another embodiment of the combustor assembly including an embodiment of the shroud and an embodiment of the fuel nozzle each generally provided in FIGS. 2-8.

Repeat use of reference characters in the present specification and drawings is intended to represent the same or analogous features or elements of the present invention.

### DETAILED DESCRIPTION

Reference now will be made in detail to embodiments of the invention, one or more examples of which are illustrated in the drawings. Each example is provided by way of explanation of the invention, not limitation of the invention. In fact, it will be apparent to those skilled in the art that various modifications and variations can be made in the present invention without departing from the scope or spirit of the invention. For instance, features illustrated or described as part of one embodiment can be used with another embodiment to yield a still further embodiment. Thus, it is intended that the present invention covers such modifications and variations as come within the scope of the appended claims and their equivalents.

As used herein, the terms "first", "second", and "third" may be used interchangeably to distinguish one component from another and are not intended to signify location or importance of the individual components.

The terms "upstream" and "downstream" refer to the relative direction with respect to fluid flow in a fluid pathway. For example, "upstream" refers to the direction from which the fluid flows, and "downstream" refers to the direction to which the fluid flows. The terms "upstream of' or "downstream of' generally refer to directions from a given location or feature toward "upstream end 99" or toward "downstream end 98", respectively, as provided in the figures.

Embodiments of a combustor assembly for a gas turbine engine including a fuel nozzle and annular shroud are generally provided that may desirably alter the heat release characteristics of each fuel nozzle and annular shroud combination to mitigate undesired combustion dynamics. The annular shroud generally defines a mixer surrounding each fuel nozzle, such as defining a flow passage between one or more main fuel injection openings in the fuel nozzle and a flow of air from a diffuser cavity to a combustion chamber.

The combustor assembly including the embodiments of the fuel nozzle and annular shroud shown and described herein may attenuate pressure oscillations characterized by high pressure fluctuations that are sustained in a combustion chamber of a combustion section. Embodiments of the fuel nozzle and annular shroud may mitigate such pressure oscillations by altering the heat release characteristics of each flame from each fuel nozzle. Altering the heat release characteristics, such as flame structure, characteristic time, or both, for each fuel nozzle may then decouple heat release from pressure fluctuations, thereby mitigating undesired combustion dynamics.

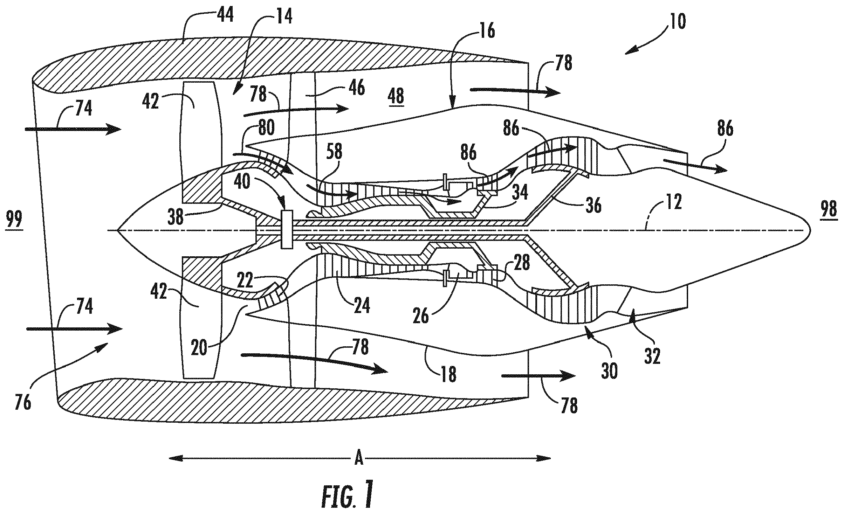

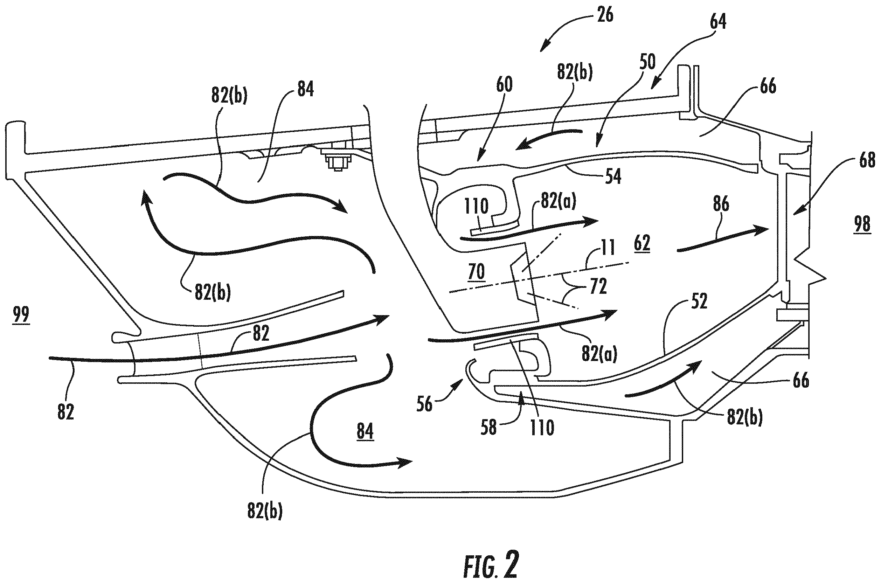

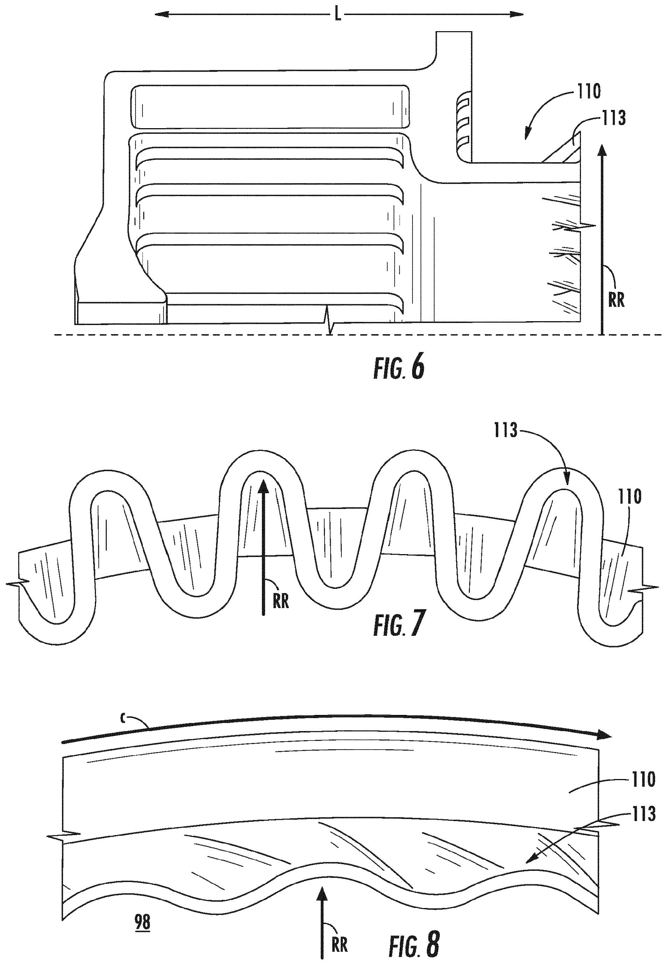

Referring now to the drawings, FIG. 1 is a schematic partially cross-sectioned side view of an exemplary high by-pass turbofan engine 10 herein referred to as "engine 10" as may incorporate various embodiments of the present disclosure. Although further described below with reference to a turbofan engine, the present disclosure is also applicable to propulsion systems and turbomachinery in general, including turbojet, turboprop, and turboshaft gas turbine engines and marine and industrial turbine engines and auxiliary power units. As shown in FIG. 1, the engine 10 has a longitudinal or axial centerline axis 12 that extends there through for reference purposes and generally along an axial direction A. The engine 10 further defines a radial direction R extended from the axial centerline 12, and a circumferential direction C (shown in FIGS. 2 and 6) around the axial centerline 12. The engine 10 further defines an upstream end 99 and a downstream 98 generally opposite of the upstream end 99 along the axial direction A. In general, the engine 10 may include a fan assembly 14 and a core engine 16 disposed downstream from the fan assembly 14.

The core engine 16 may generally include a substantially tubular outer casing 18 that defines an annular inlet 20. The outer casing 18 encases or at least partially forms, in serial flow relationship, a compressor section having a booster or low pressure (LP) compressor 22, a high pressure (HP) compressor 24, a combustion section 26, a turbine section including a high pressure (HP) turbine 28, a low pressure (LP) turbine 30 and a jet exhaust nozzle section 32. A high pressure (HP) rotor shaft 34 drivingly connects the HP turbine 28 to the HP compressor 24. A low pressure (LP) rotor shaft 36 drivingly connects the LP turbine 30 to the LP compressor 22. The LP rotor shaft 36 may also be connected to a fan shaft 38 of the fan assembly 14. In particular embodiments, as shown in FIG. 1, the LP rotor shaft 36 maybe connected to the fan shaft 38 by way of a reduction gear 40 such as in an indirect-drive or geared-drive configuration. In other embodiments, the engine 10 may further include an intermediate pressure (IP) compressor and turbine rotatable with an intermediate pressure shaft.

As shown in FIG. 1, the fan assembly 14 includes a plurality of fan blades 42 that are coupled to and that extend radially outwardly from the fan shaft 38. An annular fan casing or nacelle 44 circumferentially surrounds the fan assembly 14 and/or at least a portion of the core engine 16. In one embodiment, the nacelle 44 may be supported relative to the core engine 16 by a plurality of circumferentially-spaced outlet guide vanes or struts 46. Moreover, at least a portion of the nacelle 44 may extend over an outer portion of the core engine 16 so as to define a bypass airflow passage 48 therebetween.

FIG. 2 is a cross sectional side view of an exemplary combustion section 26 of the core engine 16 as shown in FIG. 1. As shown in FIG. 2, the combustion section 26 may generally include an annular type combustor 50 having an annular inner liner 52, an annular outer liner 54 and a dome wall 56 that extends radially between upstream ends 58, 60 of the inner liner 52 and the outer liner 54 respectfully. In other embodiments of the combustion section 26, the combustion assembly 50 maybe a can or can-annular type. As shown in FIG. 2, the inner liner 52 is radially spaced from the outer liner 54 with respect to axial centerline 12 (FIG. 1) and defines a generally annular combustion chamber 62 therebetween.

As shown in FIG. 2, the inner liner 52 and the outer liner 54 may be encased within an outer casing 64. An outer flow passage 66 may be defined around the inner liner 52, the outer liner 54, or both. The inner liner 52 and the outer liner 54 may extend from the dome wall 56 towards a turbine nozzle or inlet 68 to the HP turbine 28 (FIG. 1), thus at least partially defining a hot gas path between the combustor assembly 50 and the HP turbine 28. A fuel nozzle 70 may extend at least partially through the dome wall 56 and provide a fuel-air mixture 72 to the combustion chamber 62.

During operation of the engine 10, as shown in FIGS. 1 and 2 collectively, a volume of air as indicated schematically by arrows 74 enters the engine 10 through an associated inlet 76 of the nacelle 44 and/or fan assembly 14. As the air 74 passes across the fan blades 42 a portion of the air as indicated schematically by arrows 78 is directed or routed into the bypass airflow passage 48 while another portion of the air as indicated schematically by arrow 80 is directed or routed into the LP compressor 22. Air 80 is progressively compressed as it flows through the LP and HP compressors 22, 24 towards the combustion section 26. As shown in FIG. 2, the now compressed air as indicated schematically by arrows 82 flows across a compressor exit guide vane (CEGV) 67 and through a prediffuser 65 into a diffuser cavity or head end portion 84 of the combustion section 26.

The prediffuser 65 and CEGV 67 condition the flow of compressed air 82 to the fuel nozzle 70. The compressed air 82 pressurizes the diffuser cavity 84. The compressed air 82 enters the fuel nozzle 70 to mix with a fuel. The fuel nozzles 70 premix fuel and air 82 within the array of fuel injectors with little or no swirl to the resulting fuel-air mixture 72 exiting the fuel nozzle 70. After premixing the fuel and air 82 within the fuel nozzles 70, the fuel-air mixture 72 burns from each of the plurality of fuel nozzles 70 as an array of flames.

Referring still to FIGS. 1 and 2 collectively, the combustion gases 86 generated in the combustion chamber 62 flow from the combustor assembly 50 into the HP turbine 28, thus causing the HP rotor shaft 34 to rotate, thereby supporting operation of the HP compressor 24. As shown in FIG. 1, the combustion gases 86 are then routed through the LP turbine 30, thus causing the LP rotor shaft 36 to rotate, thereby supporting operation of the LP compressor 22 and/or rotation of the fan shaft 38. The combustion gases 86 are then exhausted through the jet exhaust nozzle section 32 of the core engine 16 to provide propulsive thrust.

As the fuel-air mixture burns, pressure oscillations occur within the combustion chamber 62. These pressure oscillations may be driven, at least in part, by a coupling between the flame's unsteady heat release dynamics, the overall acoustics of the combustor 50 and transient fluid dynamics within the combustor 50. The pressure oscillations generally result in undesirable high-amplitude, self-sustaining pressure oscillations within the combustor 50. These pressure oscillations may result in intense, frequently single-frequency or multiple-frequency dominated acoustic waves that may propagate within the generally closed combustion section 26.

Depending, at least in part, on the operating mode of the combustor 50, these pressure oscillations may generate acoustic waves at a multitude of low or high frequencies. These acoustic waves may propagate downstream from the combustion chamber 62 towards the high pressure turbine 28 and/or upstream from the combustion chamber 62 back towards the diffuser cavity 84 and/or the outlet of the HP compressor 24. In particular, as previously provided, low frequency acoustic waves, such as those that occur during engine startup and/or during a low power to idle operating condition, and/or higher frequency waves, which may occur at other operating conditions, may reduce operability margin of the turbofan engine and/or may increase external combustion noise, vibration, or harmonics.

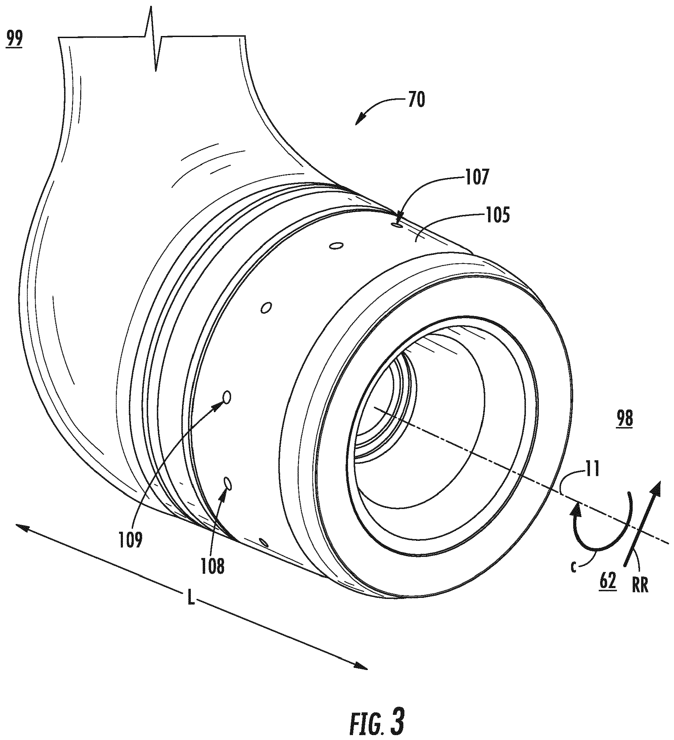

Referring now to the exemplary embodiment of the combustor assembly 50 including the fuel nozzle 70 generally provided in FIG. 3, the fuel nozzle 70 includes a centerbody 105 extended along the lengthwise direction L. The fuel nozzle 70 defines a nozzle centerline 11 extended through the centerbody 105 of the fuel nozzle 70 along the lengthwise direction L. The fuel nozzle 70 defines one or more exit openings 107 in circumferential arrangement on the centerbody 105 relative to the nozzle centerline 11. In various embodiments, the exit openings 107 define a main fuel flow outlet from the fuel nozzle 70 to the combustion chamber 62. For example, the exit openings 107 may be configured to provide a flow of fuel to operate the combustor assembly 50 and the engine 10 at a maximum or high power condition or less.

In one embodiment, the plurality of exit openings 107 defines two or more cross sectional areas through the centerbody 105 different from one another. For example, the fuel nozzle 70 defines a first exit opening 108 defining a first cross sectional area and a second exit opening 109 defining a second cross sectional area greater than the first cross sectional area. The plurality of exit openings 107 provide a fuel to the combustion chamber 62 at two or more pressures or flow rates corresponding to the two or more cross sectional areas through the centerbody 105. The two or more cross sectional areas of the exit openings 107 providing two or more pressures or flow rates of fuel to the combustion chamber 62 may mitigate such pressure oscillations by altering the heat release characteristics of each flame from each fuel nozzle 70. More specifically, the two or more exit openings 107 of each fuel nozzle 70 may alter the flame structure, characteristic time, or both, for each fuel nozzle 70, thereby decoupling heat release from pressure fluctuations and mitigating undesired combustion dynamics.

In one embodiment, the plurality of exit openings 107 of each fuel nozzle 70 may define a nominal first exit opening 108 of the first cross sectional area and the second exit opening 109 of the second cross sectional area up to approximately 50% greater than the first cross sectional area. It should be appreciated that a volume of a fuel passage within the fuel nozzle 70 extending in fluid communication with each exit opening 107 may generally correspond to the cross sectional area defined by each exit opening 107 (e.g., first cross sectional area corresponding to the first exit opening 108, the second cross sectional area corresponding to the second exit opening 109, etc.). Still further, it should be appreciated that the fuel nozzle 70 may define a third exit opening corresponding to a third cross sectional area, a fourth exit opening corresponding to a fourth cross sectional area, etc., in which each exit opening and cross sectional area defines a different pressure, flow rate, or both of the fuel egressing therefrom into the combustion chamber 62.

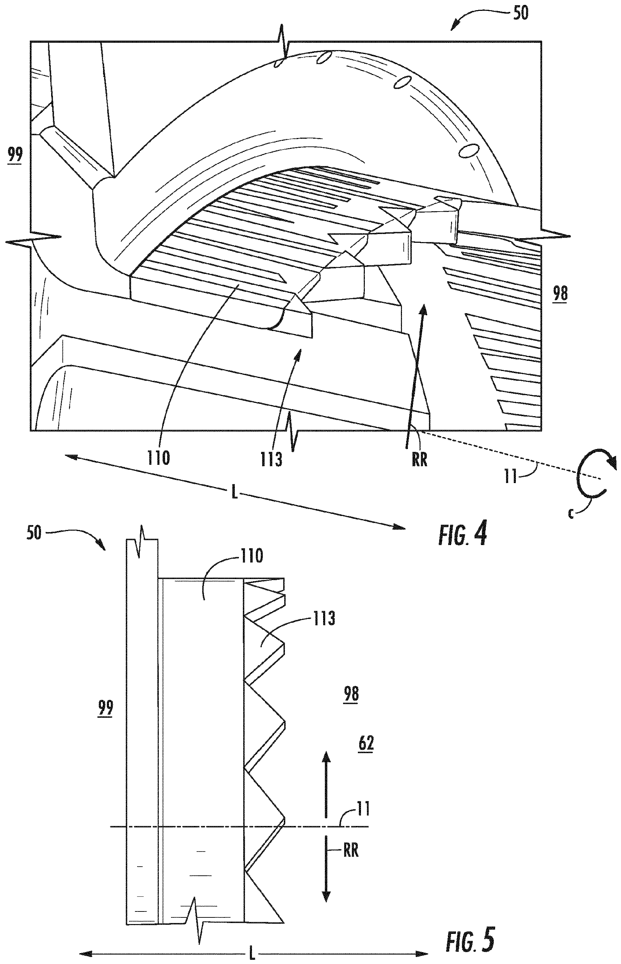

Referring back to FIG. 2, the combustor assembly 50 further includes an annular shroud 110 or mixer surrounding the centerbody 105 of the fuel nozzle 70. In various embodiments, such as generally provided in FIGS. 4-8, at least a portion of the shroud 110 defines a contoured structure 113 defining a waveform. For example, in various embodiments the waveform is a triangle, a sinusoidal, or a box waveform. In one embodiment, such as shown in FIGS. 4-5, the contoured structure 113 of the shroud extends along the lengthwise direction L. For example, the contoured structure 113 of the annular shroud 110 may define a waveform in which a lengthwise portion of the annular shroud 110 is extended varyingly along the lengthwise direction L depending on the radial location along the annular shroud 110 relative to the nozzle centerline 11.

In another embodiment, such as generally provided in FIGS. 6-7, the contoured structure 113 of the annular shroud 110 extends at least partially along the radial direction RR relative to the nozzle centerline 11. For example, the contoured structure 113 of the annular shroud 110 defines the waveform along the radial direction RR from the nozzle centerline 11. The contoured structure 113 is extended varyingly along the radial direction RR depending on the radial location along the annular shroud 110 relative to the nozzle centerline 11.

Regarding FIGS. 4-7, the contoured structure 113 defining a waveform may further define one or more frequencies or amplitudes. For example, the contoured structure 113 may define a constant or regular frequency or amplitude around the annular shroud 110. The annular shroud 110 may be approximately symmetric along the radial direction RR from the nozzle centerline 11. In another embodiment, the contoured structure 113 may define a varying frequency or amplitude around the annular shroud 110. The annular shroud 110 may be symmetric and defining a plurality of frequencies, amplitudes, or both relative to a radial location along the annular shroud 110 from the nozzle centerline 11. In still other embodiments, the contoured structure 113 may define an asymmetric pattern of the plurality of frequencies, amplitudes, or both. For example, in various embodiments, the contoured structure 113 is irregular along the annular shroud 110.

Referring now to FIG. 8, the contoured structure 113 of the shroud 110 further extends at least partially along the radial direction RR and a circumferential direction C relative to the nozzle centerline 11. For example, the contoured structure 113 of the shroud 110 at least partially defines a twist such that an upstream portion of the contoured structure 113 is offset circumferentially from a downstream portion of the contoured structure 113.

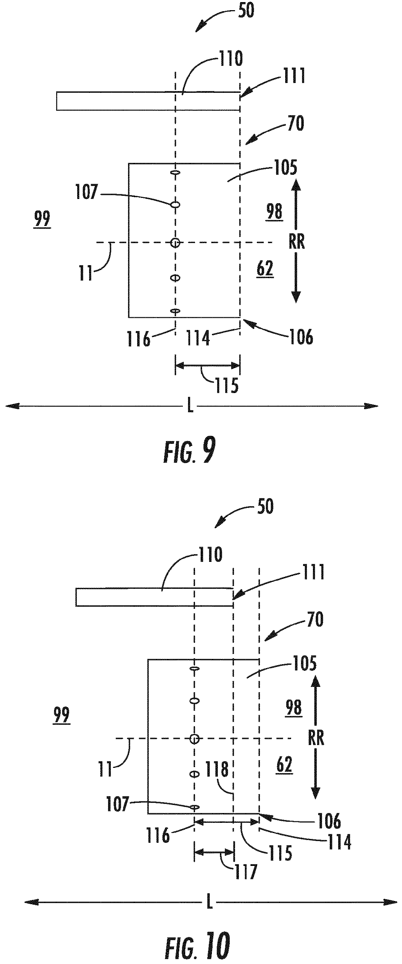

Referring now to FIGS. 9-10, exemplary embodiments of the shroud 110 and the fuel nozzle 70 together is generally provided. FIGS. 9-10 generally depict various embodiments of the disposition of a downstream end of the shroud 110 relative to a downstream end of the fuel nozzle 70 as may be applied throughout the circumferential arrangement of fuel nozzles 70 in the combustor assembly 50.

The fuel nozzle 70 defines a reference plane from the nozzle centerline 11 and the radial direction RR along the nozzle centerline 11. The shroud 110 defines a downstream-most end 111 and the centerbody 105 of the fuel nozzle 70 defines a downstream-most end 106. Referring to FIG. 9, the shroud 110 and the centerbody 105 each define their respective downstream-most end 106, 111 approximately co-planar relative to the a first reference plane 114 defined along the radial direction RR from the nozzle centerline 11. For example, the downstream-most end 111 of the shroud 110 is disposed approximately co-planar at the first reference plane 114 (i.e., (i.e., the downstream-most ends 111, 106 are approximately equal along the lengthwise direction L).

Referring still to FIG. 9, the downstream-most end 111 of the shroud 110 defines a distance 115 along the lengthwise direction L from a planar location of the plurality of exit openings 107 defined in the centerbody 105. For example, the planar location of the exit openings 107 through the centerbody 105, shown schematically as a second reference plane 116 defined along the radial direction RR from the nozzle centerline 11, defines the distance 115 to the first reference plane 114. In the embodiment generally provided in FIG. 9, the downstream-most end 106 of the centerbody 105 is approximately equal along the lengthwise direction L to the downstream-most end 111 of the shroud 110.

Referring now to FIG. 10, the downstream-most end 111 of the shroud 110 defines a third reference plane 118 defined along the radial direction RR from the nozzle centerline 11 different from the first reference plane 114. In the embodiment provided in FIG. 10, the third reference plane 118 is defined downstream along the lengthwise direction L of the second reference plane 116. The downstream-most end 111 of the shroud 110 defines a distance 117 along the lengthwise direction L from the second reference plane 116 defining the planar location of the plurality of exit openings 107 less than the distance 115 of the first reference plane 114 to the second reference plane 116. For example, the distance 117 along the lengthwise direction L from the downstream-most end 111 of the shroud 110 is less than the distance 115 along the lengthwise direction L from the downstream-most end 106 of the centerbody 105. As another example, the third reference plane 118 is defined upstream along the lengthwise direction L of the first reference plane 114.

In other embodiments, the third reference plane 118 is defined downstream along the lengthwise direction L of the first reference plane 114. The downstream-most end 111 of the shroud 110 defines a distance 117 along the lengthwise direction L from the second reference plane 116 defining the planar location of the plurality of exit openings 107 greater than the distance 115 of the first reference plane 114 to the second reference plane 116. For example, the distance 117 along the lengthwise direction L from the downstream-most end 111 of the shroud 110 is greater than the distance 115 along the lengthwise direction L from the downstream-most end 106 of the centerbody 105.

It should be appreciated that the second reference plane 116 may be defined through a center point of the plurality of exit openings 107. However, in other embodiments, the second reference plane 116 may be defined relative to a perimeter or another geometric feature of the exit openings 107. In still various embodiments, the distance 117 of the downstream-most end 111 of the shroud 110 may be greater than the distance 115 of the downstream-most end 106 of the centerbody 105.

Referring to FIGS. 9-10, the engine 10 may define a plurality of the fuel nozzles 70 defining the embodiments generally provided in FIGS. 9-10 disposed in circumferential arrangement around the axial centerline A. For example, the embodiment of the fuel nozzle 70 and shroud 110 generally provided in FIG. 9 may define a first immersion depth of the fuel nozzle 70 relative to the shroud 110 and the embodiment generally provided in FIG. 10 may define one or more second immersion depths. The first immersion depth (i.e., the distance 115) may generally define the downstream-most end 111 of the shroud 110 co-planar with the downstream-most end 106 of the centerbody 105, such as generally shown and described in regard to FIG. 9. The second immersion depth (i.e., the distance 117) may generally define the downstream-most end 111 of the shroud 110 along a different plane or position along the lengthwise direction L from the distance 115, such as shown and described in regard to FIG. 10 and its embodiments.

In various embodiments, the engine 10 defines a first fuel nozzle and a second fuel nozzle. The first fuel nozzle defines the first immersion depth (i.e., the distance 115, such as generally provided in FIG. 9) of the exit openings 107 relative to the downstream-most end 111 of the shroud 110. The second fuel nozzle defines the second immersion depth (i.e., the distance 117, such as generally provided in FIG. 10 and its embodiments) of the exit openings 107 relative to the downstream-most end 111 of the shroud 110 different from the first immersion depth.

In still various embodiments, the first fuel nozzle and the second fuel nozzle may each define one or more of the contoured structure 113 generally described and shown in regard to FIGS. 4-8. For example, the first fuel nozzle may define an axially extended contoured structure 113 such as generally provided in regard to FIGS. 4-5. The second fuel nozzle may define a radially extended contoured structure 113 such as generally provided in FIGS. 6-8. It should be appreciated that the engine 10 may define a third, fourth, fifth, etc. fuel nozzle defining variations of the contoured structure 113 generally provided and described in regard to FIGS. 4-8.

For example, in various embodiments, the combustor assembly 50 may define a plurality of the fuel nozzles 70 in which up to half of the total plurality of fuel nozzles 70 defines the shroud 110 relative to the exit openings 107 of the first immersion depth (e.g., the distance 115, such as generally provided in FIG. 9) and the remainder of the plurality of fuel nozzles 70 of the second immersion depth (e.g., distance 117, such as generally provided in FIG. 10). As another example, the plurality of fuel nozzles 70 may define an (X) total quantity of fuel nozzles 70, in which (Y) quantity define the first immersion depth and (X-Y) quantity define the remainder (e.g., a second immersion depth, a third immersion depth,... an Nth immersion depth). In one embodiment, the (Y) quantity of fuel nozzles 70 defining the first immersion depth may define up to half of the (X) total quantity of fuel nozzles 70.

In still various embodiments, the plurality of fuel nozzles 70 may dispose the shroud 110 embodiments as generally provided in regard to FIGS. 4-8 in alternating circumferential arrangement. For example, the plurality of fuel nozzles 70 may define the first immersion depth in every Nth fuel nozzle 70 around the circumferential arrangement and the remainder as the second immersion depth, third immersion depth, etc. For example, every 2^{nd}, or 3^{rd}, or 4^{th}, or Nth fuel nozzle 70 in circumferential arrangement may define the first immersion depth (e.g., distance 115 generally provided in FIG. 9) or one or more of the second immersion depth (e.g., distance 117 generally provided in FIG. 10).

The various embodiments of the engine 10 may provide a flow of fuel through the centerbody 105 and egressing from the plurality of exit openings 107 into the combustion chamber 62. The contoured structure 113 of the annular shroud 110 provides a circumferentially asymmetric flame within the combustion chamber 62 relative to the axial centerline 12.

All or part of the combustor assembly 50, fuel nozzle 70, and annular shroud 110 may each be part of a single, unitary component and may be manufactured from any number of processes commonly known by one skilled in the art. These manufacturing processes include, but are not limited to, those referred to as "additive manufacturing" or "3D printing". Additionally, any number of casting, machining, welding, brazing, or sintering processes, or any combination thereof may be utilized to construct the fuel nozzle 70 and the shroud 110. Furthermore, the combustor assembly 50 may constitute one or more individual components that are mechanically joined (e.g. by use of bolts, nuts, rivets, or screws, or welding or brazing processes, or combinations thereof) or are positioned in space to achieve a substantially similar geometric, aerodynamic, or thermodynamic results as if manufactured or assembled as one or more components. Non-limiting examples of suitable materials include high-strength steels, nickel and cobalt-based alloys, and/or metal or ceramic matrix composites, or combinations thereof.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they include structural elements that do not differ from the literal language of the claims, or if they include equivalent structural elements with insubstantial differences from the literal languages of the claims.

| Reference Character | Component |
|---|---|
| 10 | Engine |
| 11 | Nozzle Centerline |
| 12 | Axial centerline |
| 14 | Fan Assembly |
| 15 | Fan Rotor |
| 18 | Outer Casing |
| | |
| 22 | LPC |
| 24 | HPC |
| 26 | Combustion Section |
| 28 | HPT |
| 30 | LPT |
| 31 | Turbine Section |
| 34 | HP Shaft |
| 36 | LP shaft |
| 40 | Reduction Gearbox |
| 42 | Fan Blades |
| 44 | Nacelle |
| 48 | Bypass Flow Passage |
| 50 | Combustor |
| 52 | Inner Liner |
| 54 | Outer Liner |
| 56 | Dome Wall |
| 57 | Dome Assembly |
| 60 | Bypass Duct |
| 62 | Combustion Chamber |
| 66 | Outer Flow Passage |
| 67 | Compressor Exit Guide Vane (CEGV) |
| 70 | Fuel Nozzle |
| 72 | Fuel Air Mixture |
| 74 | Ambient Air (Sta 1.0) |
| 76 | Inlet (of engine 10) |
| 80 | Air (Sta. 2.0) |
| 82 | Compressed Air (Sta. 3.0) |
| | |
| 84 | Diffuser Cavity |
| 86 | Combustion Gases |
| 98 | Downstream End |
| 99 | Upstream End |
| | |
| 105 | Centerbody |
| 106 | Downstream-Most End (of 105) |
| 107 | Plurality of Exit Openings |
| 108 | First Exit Opening |
| 109 | Second Exit Opening |
| 110 | Annular Shroud (mixer) |
| 111 | Downstream-Most End (of 110) |
| 113 | Contoured Structure |
| 114 | First Reference Plane |
| 115 | Distance (to 114) |
| 116 | Second Reference Plane |
| 117 | Distance (to 116) |
| 118 | Third Reference Plane |
| | |
| | |
| | |
| | |

Various aspects and embodiments of the present invention are disclosed in the following numbered clauses. Any features of any of the aspects and/or embodiments may be readily combined with one or more features of any other aspect or embodiment described herein.
1. A combustor assembly for a gas turbine engine, the combustor assembly comprising:
   a fuel nozzle comprising a centerbody extended along a lengthwise direction, wherein the fuel nozzle defines a nozzle centerline extended through the centerbody of the fuel nozzle along the lengthwise direction, the fuel nozzle defining a plurality of exit openings in circumferential arrangement on the centerbody relative to the nozzle centerline;
   an annular shroud surrounding the centerbody of the fuel nozzle, wherein at least a portion of the shroud defines a contoured structure defining a waveform.
2. The combustor assembly of clause 1, wherein the waveform is triangle, sinusoidal, or box.
3. The combustor assembly of clause 1 or clause 2, wherein the contoured structure of the shroud extends along the lengthwise direction.
4. The combustor assembly of any preceding clause, wherein the combustor assembly defines a second reference plane along the radial direction from the nozzle centerline at a position along the lengthwise direction, and wherein the plurality of exit openings on the centerbody are defined at least approximately along the second reference plane.
5. The combustor assembly of any preceding clause, wherein the combustor assembly defines a first reference plane along the radial direction from the nozzle centerline at a position along the lengthwise direction, and wherein the shroud and the centerbody each define a downstream-most end approximately co-planar at the first reference plane.
6. The combustor assembly of clause 4 or clause 5, wherein the combustor assembly defines a third reference plane along the radial direction from the nozzle centerline at a position along the lengthwise direction, and wherein the third reference plane is defined downstream of the second reference plane along the lengthwise direction, and wherein a downstream-most end of the shroud is defined at least approximately at the third reference plane.
7. The combustor assembly of any preceding clause, wherein the contoured structure of the shroud extends at least partially along a radial direction relative to the nozzle centerline.
8. The combustor assembly of any preceding clause, wherein the contoured structure of the shroud further extends at least partially along a circumferential direction relative to the nozzle centerline.
9. The combustor assembly of any preceding clause, wherein the exit openings define two or more cross sectional areas through the centerbody different from one another.
10. The combustor assembly of any preceding clause, wherein the plurality of exit openings defines a first exit opening of a first cross sectional area and a second exit opening of a second cross sectional area different from the first cross sectional area.
11. A gas turbine engine defining an axial centerline, a radial direction extended therefrom, and a circumferential direction around the axial centerline, the gas turbine engine comprising:
   a combustor assembly disposed generally concentric to the axial centerline of the gas turbine engine, the combustor assembly comprising a plurality of fuel nozzles disposed in circumferential arrangement around the axial centerline, wherein each fuel nozzle comprises a centerbody extended along a lengthwise direction and defining a nozzle centerline therethrough, and wherein an annular shroud is defined around the centerbody, and wherein at least a portion of the shroud defines a contoured structure defining a waveform, and wherein each fuel nozzle defines a plurality of exit openings in circumferential arrangement on the centerbody relative to the nozzle centerline.
12. The gas turbine engine of clause 11, wherein the combustor assembly defines a second reference plane along the radial direction from the nozzle centerline at a position along the lengthwise direction, and wherein the plurality of exit openings on the centerbody are defined at least approximately along the second reference plane.
13. The gas turbine engine of clause 12, wherein the combustor assembly defines a first reference plane along the radial direction from the nozzle centerline at a position along the lengthwise direction, and wherein the shroud and the centerbody each define a downstream-most end approximately co-planar at the first reference plane, and wherein the first reference plane relative to the second reference plane defines a first immersion depth of the fuel nozzle.
14. The gas turbine engine of clause 12 or clause 13, wherein the combustor assembly defines a third reference plane along the radial direction from the nozzle centerline at a position along the lengthwise direction, and wherein the third reference plane is defined downstream of the second reference plane along the lengthwise direction, and wherein a downstream-most end of the shroud is defined at least approximately at the third reference plane, and wherein the third reference plane relative to the second reference plane defines a second immersion depth of the fuel nozzle.
15. The gas turbine engine of any of clauses 11 to 14, wherein the waveform is triangle, sinusoidal, or box.
16. The gas turbine engine of any of clauses 11 to 15, wherein the contoured structure of the shroud extends along the lengthwise direction.
17. The gas turbine engine of any of clauses 11 to 16, wherein the contoured structure of the shroud extends at least partially along a radial direction relative to the nozzle centerline.
18. The gas turbine engine of any of clauses 11 to 17, wherein the contoured structure of the shroud further extends at least partially along a circumferential direction relative to the nozzle centerline.
19. The gas turbine engine of any of clauses 11 to 18, wherein the combustor assembly defines a first annular shroud and a second annular shroud, the first annular shroud defining a first waveform different from a second waveform of the second annular shroud.
20. The gas turbine engine of any of clauses 11 to 19, wherein the fuel nozzle is configured to provide a flow of fuel through the centerbody and egressing from the exit openings into a combustion chamber of the combustor assembly, and wherein the contoured structure of the annular shroud provides a circumferentially asymmetric flame relative to the axial centerline within the combustion chamber.

## Claims

1. A gas turbine engine (10) defining an axial centerline (12), a radial direction extended therefrom, and a circumferential direction around the axial centerline (12), the gas turbine engine (10) comprising:
a combustor assembly (50) disposed generally concentric to the axial centerline of the gas turbine engine (10), the combustor assembly (50) comprising a plurality of fuel nozzles (70) disposed in circumferential arrangement around the axial centerline, wherein each fuel nozzle (70) comprises a centerbody (105) extended along a lengthwise direction and defining a nozzle centerline (11) therethrough, and wherein an annular shroud (110) is defined around the centerbody (105), and wherein at least a portion of the shroud (110) defines a contoured structure (113) defining a waveform, and wherein each fuel nozzle (70) defines a plurality of exit openings (107) in circumferential arrangement on the centerbody (105) relative to the nozzle centerline (11).

2. The gas turbine engine (10) of claim 1, wherein the combustor assembly (50) defines a second reference plane (116) along the radial direction from the nozzle centerline (11) at a position along the lengthwise direction, and wherein the plurality of exit openings (107) on the centerbody (105) are defined at least approximately along the second reference plane (116).

3. The gas turbine engine (10) of claim 2, wherein the combustor assembly (50) defines a first reference plane (114) along the radial direction from the nozzle centerline (11) at a position along the lengthwise direction, and wherein the shroud (110) and the centerbody (105) each define a downstream-most end (111), (106) approximately co-planar at the first reference plane (114), and wherein the first reference plane (114) relative to the second reference plane (116) defines a first immersion depth of the fuel nozzle (70).

4. The gas turbine engine (10) of claim 2 or claim 3, wherein the combustor assembly (50) defines a third reference plane (118) along the radial direction from the nozzle centerline (11) at a position along the lengthwise direction, and wherein the third reference plane (118) is defined downstream of the second reference plane (116) along the lengthwise direction, and wherein a downstream-most end (111) of the shroud (110) is defined at least approximately at the third reference plane (118), and wherein the third reference plane (118) relative to the second reference plane (116) defines a second immersion depth of the fuel nozzle (70).

5. The gas turbine engine (10) of claim 4 when dependent on claim 3, wherein the combustor assembly (50) defines the plurality of the fuel nozzles (70) in which up to half of the total plurality of fuel nozzles (70) defines the first immersion depth and the remainder of the plurality of fuel nozzles (70) defines the second immersion depth

6. The gas turbine engine (10) of any of claims 3 to 5, wherein the combustor assembly (50) defines a third reference plane (118) along the radial direction from the nozzle centerline (11) at a position along the lengthwise direction, and wherein the third reference plane (118) is defined upstream of the first reference plane (114) along the lengthwise direction, and wherein a downstream-most end (111) of the shroud (110) is defined at least approximately at the third reference plane (118).

7. The gas turbine engine (10) of any preceding claim, wherein the waveform is triangle, sinusoidal, or box.

8. The gas turbine engine (10) of any preceding claim, wherein the contoured structure (113) of the shroud (110) extends along the lengthwise direction.

9. The gas turbine engine (10) of any preceding claim, wherein the contoured structure (113) of the shroud (110) extends at least partially along a radial direction relative to the nozzle centerline (11).

10. The gas turbine engine (10) of any preceding claim, wherein the contoured structure (113) of the shroud (110) further extends at least partially along a circumferential direction relative to the nozzle centerline (11).

11. The gas turbine engine (10) of any preceding claim, wherein the combustor assembly (50) defines a first annular shroud (110) and a second annular shroud (110), the first annular shroud (110) defining a first waveform different from a second waveform of the second annular shroud (110).

12. The gas turbine engine (10) of any preceding claim, wherein the fuel nozzle (70) is configured to provide a flow of fuel through the centerbody (105) and egressing from the exit openings (107) into a combustion chamber (62) of the combustor assembly (50), and wherein the contoured structure (113) of the annular shroud (110) provides a circumferentially asymmetric flame relative to the axial centerline (12) within the combustion chamber (62).

13. The gas turbine engine (10) of any preceding claim, wherein the exit openings (107) define two or more cross sectional areas through the centerbody (105) different from one another.

14. The gas turbine engine (10) of any preceding claim, wherein the plurality of exit openings (107) defines a first exit opening (108) of a first cross sectional area and a second exit opening (109) of a second cross sectional area different from the first cross sectional area.

15. The gas turbine engine (10) of any preceding claim, wherein the combustor assembly (50) defines every Nth fuel nozzle (70) in circumferential arrangement defining the first immersion depth or one or more of the second immersion depth.
